Europäisches Patentamt

European Patent Office

Office européen des brevets

(11) Veröffentlichungsnummer : **0 082 446**
**B1**

(12) **EUROPÄISCHE PATENTSCHRIFT**

(45) Veröffentlichungstag der Patentschrift :
28.05.86

(21) Anmeldenummer : **82111498.0**

(22) Anmeldetag : **11.12.82**

(51) Int. Cl.⁴ : **B 23 Q 1/02**, B 23 Q 1/28,
B 27 C 7/02

(54) **Holzdrehbank.**

(30) Priorität : 23.12.81 DE 3151064

(43) Veröffentlichungstag der Anmeldung :
29.06.83 Patentblatt 83/26

(45) Bekanntmachung des Hinweises auf die Patenterteilung : 28.05.86 Patentblatt 86/22

(84) Benannte Vertragsstaaten :
AT BE CH FR GB IT LI SE

(56) Entgegenhaltungen :
CH-A- 103 933
CH-A- 317 556
GB-A- 4 593
GB-A- 610 176
US-A- 2 430 677
US-A- 2 621 552

(73) Patentinhaber : Josef Scheppach Maschinenfabrik
GmbH & Co.
Günzburger Strasse 69
D-8873 Ichenhausen (DE)

(72) Erfinder : Scheppach, Fritz, Ing. grad.
Dr.-Beer-Strasse 5
D-8873 Ichenhausen (DE)

(74) Vertreter : Munk, Ludwig, Dipl.-Ing.
Patentanwalt Prinzregentenstrasse 1
D-8900 Augsburg (DE)

EP 0 082 446 B1

## Beschreibung

Die Erfindung betrifft eine Holzdrehbank, insbesondere für Hobby- und Heimwerkereinsatz, mit einem auf Füßen abgestützten Bett zur Aufnahme eines einem stationären Spindelstock gegenüberliegenden, verschiebbar angeordneten Reitstocks und einer verschiebbar angeordneten Werkzeugauflage.

Eine Drehbank dieser Art ist aus der US-A-20 05 101 bekannt. Das Maschinenbett dieser bekannten Anordnung ist als durchgehendes, über der Länge einteiliges Bett ausgebildet. Die Länge des Bettes gibt daher den maximal möglichen Spitzenabstand vor. Der Abstand der Spindelstockspitze von der Bettoberkante gibt die maximal mögliche Spitzenhöhe vor. Diese Maße sind hierbei nicht variabel, d. h. die durch eine entsprechende Auslegung ermittelten Maschinenabmessungen sind stets vorhanden, was insgesamt eine vergleichsweise schwerfällige und unhandliche Maschine ergibt. Nachteilig hierbei ist auch der Platzbedarf sowohl im Bereich der Lagerhaltung und des Transports, als auch am Aufstellungsort.

Aus der CH-A-103 933 ist zwar bereits eine schwere Drehbank mit ausziehbarem Bett bekannt. Bei dieser bekannten Anordnung ist jedoch ein eine separate Einheit bildendes Untergestell vorgesehen, auf dem ein den Spindelstock aufnehmender Bettabschnitt fixiert und ein mit stumpfem Stoß hieran anschließender, den Reitstock und einen Werkzeugsupport aufnehmender Bettabschnitt verschiebbar gelagert sind. Nachteilig ist hier in erster Linie der durch die Verwendung eines separaten Untergestells verursachte Aufwand. Da der verschiebbare Bettabschnitt praktisch mit seiner ganzen Länge auf dem Untergestell ruht, erfordert die diesbezügliche Längsführung eine hohe Bearbeitungsgenauigkeit. Hinzu kommt, daß es bei der Anordnung gemäß CH-A-103 933 im Bereich zwischen den mit stumpfem Stoß aneinander anschließbaren Bettabschnitten zur Ansammlung von Spänen und damit zu einer Behinderung der Verschiebbarkeit des verschiebbaren Bettabschnitts kommen kann. Ein weiterer Nachteil ist darin zu sehen, daß hier eine Verlängerung des Betts jeweils nur in einer Richtung möglich ist. Insgesamt ergibt sich bei der Anordnung gemäß CH-A-103 933 demnach eine schwerfällige und unhandliche Bauweise, die für Holzdrehbänke, insbesondere für Hobby- und Heimwerkereinsatz, nicht geeignet ist.

Es ist die Aufgabe der vorliegenden Erfindung, bei einer leichten Holzdrehbank gattungsgemäßer Art unter Beibehaltung einer einfachen, handlichen und insbesondere für Hobby- und Heimwerkereinsatz geeigneten Bauweise eine Möglichkeit vorzusehen, daß trotz normalerweise gewährleisteter Kompaktheit dennoch im Einzelfall eine vergleichsweise große maximale Spitzenlänge bzw. eine vergleichsweise große maximale Spitzenhöhe erreichbar sind.

Diese Aufgabe wird erfindungsgemäß durch die Merkmale des Anspruches 1 gelöst.

Hierbei ist es möglich, durch Auseinanderschieben bzw. Zusammenschieben der beiden Bettabschnitte, die einstellbare maximale Spitzenlänge bzw. die zur Verfügung stehende maximale Spitzenhöhe zu verändern. Im ausgefahrenen Zustand, in welchem der reitstockseitige Bettabschnitt einen dem Spindelstock benachbarten, der Ausschublänge entsprechenden Abschnitt der spindelstockseitigen Auflage freigibt, ergibt sich eine um das Ausschubmaß vergrößerte maximale Spitzenlänge und eine um die Dicke des reitstockseitigen Bettabschnitts vergrößerte maximale Spitzenhöhe. Andererseits ergibt sich im zusammengeschobenen Zustand eine kompakte, handliche Maschine, was sich nicht nur vorteilhaft auf den erforderlichen Platzbedarf am Aufstellungsort, sondern auch auf die Lagerung, die Verpackung und den Transport auswirkt. Mit den erfindungsgemäßen Maßnahmen gelingt es somit auf höchst einfache und kostengünstige Weise eine gleichzeitige Befriedigung der einander entgegenlaufenden Forderungen nach großer maximaler Spitzenlänge und großer maximaler Spitzenhöhe und damit hoher Variabilität einerseits und hoher Kompaktheit andererseits.

In vorteilhafter Weiterbildung der übergeordneten Maßnahmen können der den Reitstock aufnehmende Bettabschnitt aus zwei parallelen Trägern und der andere Bettabschnitt aus zwei diesen Trägern zugeordneten, am unteren Ende des Spindelstocks festgelegten, parallelen Auflageschenkeln bestehen. Diese Maßnahmen ermöglichen in vorteilhafter Weise eine kostengünstige Stahlkonstruktion und stellen gleichzeitig einen zuverlässigen Spanabtransport im Bereich zwischen den Trägern und den Auflageschenkeln sicher.

Eine weitere besonders zu bevorzugende Fortbildung der übergeordneten Maßnahmen kann darin bestehen, daß die den spindelstockseitigen Bettabschnitt bildenden Träger im Querschnitt etwa kreuzförmig ausgebildet sind und im Bereich ihres unteren Rands die Auflageschenkel klauenförmig übergreifende Randabwinklungen aufweisen. Ein Profilträger dieser Art kann in vorteilhafter Weise als Preßformling hergestellt werden. Die im Querschnitt klauenförmige Randabwinklung führt dabei zu einer sauberen Längsführung im Eingriffsbereich zwischen den Trägern und den zugeordneten Auflageschenkeln, was die erfindungsgemäß gewährleistete Umrüstbarkeit sehr erleichtert. Die kreuzförmig angeordneten Profilausbuchtungen ergeben in vorteilhafter Weise exakte Führungsleisten zur Führung des verschiebbaren Reitstocks und zuverlässige Spannkanten zum Festspannen von Reitstock bzw. Werkzeugträger.

Weitere zweckmäßige Fortbildungen und vorteilhafte Ausgestaltungen der übergeordneten Maßnahmen ergeben sich aus der nachstehenden Beschreibung eines Ausführungsbeispiels anhand der Zeichnung in Verbindung mit den restlichen Unteransprüchen.

In der Zeichnung zeigen :

Figur 1 eine Seitenansicht einer erfindungsgemäßen Heimwerker-Holzdrehbank und

Figur 2 eine bevorzugte Bettausführung anhand eines Querschnitts durch das Bett der Anordnung nach Fig. 1.

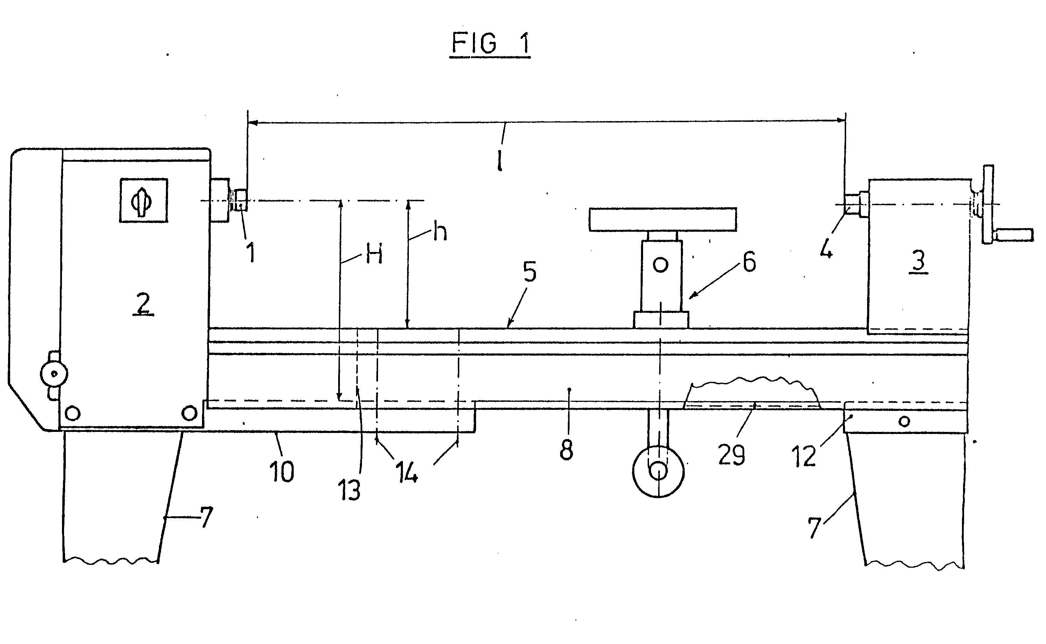

Der prinzipielle Aufbau und die Funktionsweise einer Holzdrehbank erfindungsgemäßer Art sind an sich bekannt und bedürfen daher im vorliegenden Zusammenhand keiner speziellen Erläuterung mehr. Die in Fig. 1 dargestellte Holzdrehbank besteht aus einem stationären, eine in an sich bekannter Weise angetriebene Arbeitsspindel 1 aufweisenden Spindelstock 2 und einem diesem gegenüberliegenden, in Richtung der Achse der Arbeitsspindel 1 verschiebbaren Reitstock 3, der mit einer mit der Arbeitsspindel 1 fluchtenden, in an sich bekannter Weise in axialer Richtung verstellbaren Gegenspindel 4 versehen ist. Lange Werkstücke werden mit ihren Enden spindelstockseitig und reitstockseitig aufgenommen. Hierzu können die Arbeitsspindel 1 und die Gegenspindel 4 mit entsprechenden Spitzen bestückt werden. Kurze Werkstücke werden fliegend auf einer Planscheibe oder einem Futter aufgenommen, die bzw. das an der Arbeitsspindel 1 festlegbar ist.

Der Spindelstock 2 und der Reitstock 3 sind durch ein über der Länge unterteiltes Bett miteinander verbunden, auf dessen Abschnitt 5 der Reitstock 3 verschiebbar gelagert ist. Der weitere Bettabschnitt wird durch eine das zugewandte Ende des Abschnitts 5 untergreifende Auflage 10 gebildet, die am Spindelstock 2 angebracht ist. Zur Gewährleistung einer sicheren Werkzeugführung ist eine auf dem Bettabschnitt 5 abgestützte, verstellbare, in Fig. 1 als Ganzes mit 6 bezeichnete Werkzeugauflage vorgesehen. Zur Bewerkstelligung einer bequemen Arbeitshöhe sind im dargestellten Ausführungsbeispiel im Bereich beider, einander gegenüberliegender Maschinenenden paarweise angeordnete Füße 7 vorgesehen. Die Füße 7 sind abnehmbar, was einen Umbau zu einer Tischdrehbank ermöglicht.

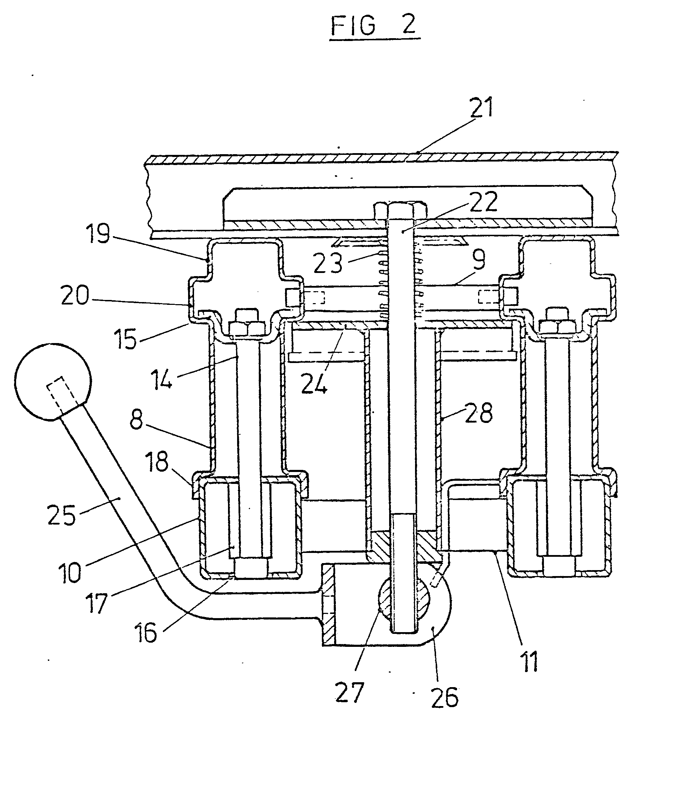

Der dem Reitstock zugeordnete Bettabschnitt 5 besteht, wie am besten aus Fig. 2 erkennbar ist, aus zwei parallelen Profilträgern 8, die durch im Bereich ihrer Enden vorgesehene Distanzhalter 9 miteinander verbunden sind. Der Reitstock 3 ist auf den Trägern 8 gelagert und geführt. Der die Auflage 10 bildende Bettabschnitt besteht aus zwei am Spindelstock 2 festgelegten Auflageleisten, welche auf ihrem reitstockseitig auskragenden Abschnitt das spindelstockseitige Ende der Träger 8 aufnehmen. Die entlang einer Längsführung in gegenseitigem Eingriff stehenden Träger 8 und Auflageleisten 10 sind mittels einer Spanneinrichtung lösbar aneinander festlegbar. Die Auflageschenkel 10 sind durch vorzugsweise im Bereich des Spindelstocks 2 angeordnete Distanzbolzen 11 miteinander verbunden. Der Spindelstock 2 kann mit einer Fußplatte auf die Auflageschenkel 10 aufgesetzt sein. Im dargestellten Ausführungsbeispiel sind die Auflageschenkel 10 gemäß Fig. 1 einfach mit dem unteren Rand der seitlichen Gehäusewandungen des Spindelstocks 2 verschraubt. Die spindelstockseitigen Füße 7 können dabei einfach an den Auflageschenkeln 10 befestigt sein. Das dem auf den Auflageschenkeln 10 aufgenommenen Ende gegenüberliegende Ende der Träger 8 ist ebenfalls auf Füßen 7 abgestützt, die hier nicht direkt an den Trägern 8 befestigt sind, sondern an Zwischenstücken 12, deren Querschnitt dem Querschnitt der Auflageschenkel 10 entspricht, so daß sich im Bereich beider Maschinenenden dieselbe Fußhöhe ergibt, was die Verwendung gleicher Füße ermöglicht. Die Zwischenstücke 12 können ebenfalls durch Distanzbolzen 11 miteinander verbunden sein.

In der in Fig. 1 mit durchgezogenen Linien gezeichneten Stellung sind die Träger 8 so weit auf die jeweils zugeordneten Auflageleisten 10 aufgeschoben, daß sie mit ihrer spindelstockseitigen Stirnfläche an der benachbarten Wandung des Spindelstocks 2 zur Anlage kommen. In dieser zusammengeschobenen Kompaktstellung ergeben sich ein in Fig. 1 bei 1 angedeuteter maximaler Spitzenabstand und eine bei H angedeutete maximale Spitzenhöhe. Diese lichten Maße reichen für viele Drechselarbeiten aus. Durch Verschieben der Träger 8 auf den zugeordneten Auflageschenkeln 10 in Richtung ihrer Achse läßt sich eine Vergrößerung des Spitzenabstands um den Verschiebeweg erzielen. Gleichzeitig ergibt sich hierbei zwischen dem Spindelstock 2 und der diesem zugewandten, in Fig. 1 strichpunktiert eingezeichneten Stirnseite 13 des Bettabschnitts 5 eine Lücke, so daß für kurze Werkstücke eine praktisch um die Bettdicke vergrößerte, in Fig. 1 mit H bezeichnete Spitzenhöhe zur Verfügung steht. Die Erfahrung hat gezeigt, daß ein Ausfahrbereich in der Größenordnung zwischen 200 und 300 mm den Bedürfnissen der Praxis vollständig gerecht wird. Die Länge der Auflageschenkel 10 ist zweckmäßig so bemessen, daß in der maximalen Ausfahrstellung mindestens etwa ein Drittel der über den Spindelstock 2 auskragenden Auflageschenkellänge zur Aufnahme der zugeordneten Träger 8 zur Verfügung steht.

Zur Bewerkstelligung einer lösbaren Festlegung der Träger 8 auf den zugeordneten Auflageschenkeln 10 dient eine Spanneinrichtung. Hierzu sind, wie am besten aus Fig. 2 erkennbar ist, durch Schrauben gebildete Zuganker 14 vorgesehen, die mit ihrem Kopf am zugeordneten Auflageschenkel 10 und mit einer dem Kopf gegenüberliegenden Mutter auf einer Jochplatte 15 abgestützt sind, die formschlüssig in das Profil des zugeordneten Trägers 8 eingreift. Der rinnenförmige Querschnitt der Jochplatte 15 ergibt gleichzeitig eine zuverlässige Verdrehsicherung für die Schraubenmutter. Pro Auflageschenkel 10 können jeweils zwei mit Abstand voneinander angeordnete, in Fig. 1 durch ihre Mittellinien angedeutete Zuganker 14 vorgesehen sein, die im vorderen, auch bei maximaler Auszugsstellung im Eingriff mit dem Bettabschnitt 5 bleibenden Bereich der Auflageschenkel 10 placiert sind. Zur Vermeidung vorstehender Teile sind die Köpfe der Zuganker 14 innerhalb der zweckmäßig durch Vierkantrohre gebildeten Auflageschenkel 10 angeordnet, die mit entsprechenden Durchgriffslöchern 16 versehen sind. Im dargestellten Ausführungsbeispiel sind die Köpfe der Zuganker 14 über jeweils eine Büchse 17 an der oberen Wandung des zugeordneten Auflageschenkels 10 abgestützt, was eine tiefe Lage des Zugankerkopfes und damit eine gute Zugänglichkeit zu diesem gestattet.

Jeder der Träger 8 ist auf dem jeweils zugeordneten Auflageschenkel 10 geführt. Hierzu sind die als Preßprofile ausgebildeten Träger 8 im Bereich ihrer offenen Unterseite mit dem jeweils zugeordneten Auflageschenkel 10 beidseitig klauenförmig umgreifenden Randabwinklungen 18 versehen, deren Innenmaß gegenüber dem Außenmaß des zugeordneten Auflageschenkels Verschiebespiel besitzt, so daß sich eine exakte Längsführung und eine leichte Verschiebbarkeit ergeben. Der von den Randabwinklungen 18 abgewandte obere Bereich der Träger 8 ist im Querschnitt kreuzförmig ausgebildet. Die nach oben weisende Ausbuchtung 19 bildet dabei eine Führungsleiste und eine Auflage für den Reitstock 3 und den Werkzeugträger 6. Der Reitstock 3 kann dabei im Bereich eines Trägers 8 mit einer der Führungsleiste 19 zugeordneten Führungsnut und im Bereich des benachbarten Trägers 8 mit einer der oberen Fläche der diesbezüglichen Führungsleiste 19 zugeordneten, ebenen Auflagefläche versehen sein, was eine exakte Schlittenlagerung des schlittenförmig verschiebbaren Reitstocks mit einem Fest- und einem Loslager ergibt. Die seitlichen Ausbuchtungen 20 der Träger 8 bilden innere Auflagekanten für die den Zugankern 14 zugeordnete, trägerseitig abzustützende Jochplatte 15. Gleichzeitig ergeben sich hierdurch äußere Spannkanten zum Festspannen von Reitstock 3 und Werkzeugträger 6. Dieser besteht aus einem auf den Trägern 8 aufliegenden Schwenkarm 21, der mittels eines Zugankers 22 entgegen der Kraft einer Lüftungsfeder 23 mit einer an den unteren äußeren Spannkanten der einander zugewandten Trägerausbuchtungen 20 sich abstützenden Traverse 24 verspannbar ist. Zur Bewerkstelligung einer Schnellspannvorrichtung ist dabei im dargestellten Ausführungsbeispiel ein mittels eines Betätigungshebels 25 betätigbarer Exzenternocken 26 vorgesehen, der auf einem am Zuganker 22 festgelegten Achsbolzen 27 drehbar gelagert ist und sich hier über eine vom Zuganker 22 durchsetzte Büchse 28 an der Traverse 24 abstützt. Die nach unten weisende Büchse 28 vereinfacht die Form des Betätigungshebels 25. Zum Spannen des Reitstocks 3 kann ebenfalls eine Traverse der bei 24 angedeuteten Art vorgesehen sein, die mittels geeigneter Spannschrauben oder mittels einer geeigneten Schnellspannvorrichtung mit dem Reitstockgehäuse verbunden und zusammen mit diesem auf den Trägern 8 festklemmbar ist.

Die erfindungsgemäßen Maßnahmen mit einem praktisch ein- und ausfahrbaren Maschinenbett gewährleisten ersichtlich eine hohe Vielseitigkeit hinsichtlich der maximalen Abmessungen der aufnehmbaren Werkstücke. Die Verwindungssteifigkeit der vorteilhaft als Preßformlinge hergestellten Träger 8 läßt sich dadurch sehr erhöhen, daß in ihrem weder vom zugeordneten Auflageschenkel 10 noch vom zugeordneten Zwischenstück 12 erfaßten Mittenabschnitt die unteren Ränder zur Bildung eines Kastenquerschnitts miteinander verbunden sind. Im dargestellten Ausführungsbeispiel kann hierzu einfach eine in die von den Randabwinklungen gebildete Aufnahme eingeschweißte, im Querschnitt U-förmige Schiene 29 vorgesehen sein.

## Patentansprüche

1. Holzdrehbank, insbesondere für Hobby- und Heimwerkereinsatz, mit einem auf Füßen (7) abgestützten Bett zur Aufnahme eines einem stationären Spindelstock (2) gegenüberliegenden, verschiebbar angeordneten Reitstocks (3) und einer verschiebbar angeordneten Werkzeugauflage (6), gekennzeichnet durch ein in seiner Länge verstellbares Bett, das zwei mit ihren einander zugewandten Enden aufeinander aufliegende und mit ihren voneinander abgewandten Enden auf den Füßen (7) aufgenommene Abschnitte aufweist wobei der eine Abschnitt aus zwei reitstockseitig am Spindelstock (2) auskragenden Auflageschenkeln (10) und der andere, den Reitstock (3) und die Werkzeugauflage (6) aufnehmende Abschnitt aus zwei mit ihren spindelstockseitigen Enden auf den sie untergreifenden Auflageschenkeln (10) verschiebbar geführten und mittels einer Spanneinrichtung (14, 15) lösbar hieran festlegbaren Trägern (8) besteht.

2. Holzdrehbank nach Anspruch 1, dadurch gekennzeichnet, daß der eine Bettabschnitt (5) aus zwei parallelen Trägern (8) und die diesem zugeordnete Auflage (10) aus zwei den Trägern zugeordneten, am unteren Ende des Spindelstocks (2) festgelegten, parallelen Auflageschenkeln besteht.

3. Holzdrehbank nach Anspruch 2, dadurch gekennzeichnet, daß die Träger (8) durch vorzugsweise als Abstandsbolzen ausgebildete, im Bereich ihrer Enden angeordnete Distanzhalter (9) aneinander festgelegt sind.

4. Holzdrehbank nach einem der vorhergehenden Ansprüche 1 bis 3, dadurch gekennzeichnet, daß das reitstockseitige Ende des Bettabschnitts (5) auf den die Auflage (10) bildenden Auflageschenkeln querschnittsmäßig entsprechenden, an jeweils einem zugeordneten Fuß (7) festgelegten Zwischenstücken (12) aufgenommen ist.

5. Holzdrehbank nach einem der vorhergehenden Ansprüche 1 bis 4, dadurch gekennzeichnet, daß die vorzugsweise als Preßformlinge ausgebildeten Träger (8) im Bereich ihres oberen Abschnitts einen etwa kreuzförmig ausgebildeten Querschnitt aufweisen und im Bereich ihres unteren Rands mit dem jeweils zugeordneten Auflageschenkel der Auflage (10) bzw. das jeweils zugeordnete Zwischenstück (12) beidseitig klauenförmig übergreifenden Randabwinklungen (18) versehen ist.

6. Holzdrehbank nach einem der vorhergehenden Ansprüche, dadurch gekennzeichnet, daß der Reitstock (3) im Bereich eines Trägers (8) eine Führungsnut und im Bereich des diesem benachbarten Trägers eine ebene Auflagefläche aufweist.

7. Holzdrehbank nach einem der vorhergehenden Ansprüche, dadurch gekennzeichnet, daß zur Bildung der den Auflageschenkeln der Auflage (10) zugeordneten Spanneinrichtung Zuganker (14) vorgesehen sind, die einerseits an einer formschlüssig in das Trägerprofil eingreifenden Jochplatte (15) und andererseits am jeweils zugeordneten Auflageschenkel abgestützt sind, wobei die Köpfe der Zuganker (14) vorzugsweise über Distanzbüchsen (17) am jeweils trägerseitigen Steg der Auflageschenkel abgestützt sind, deren gegenüberliegender Steg mit hierzu fluchtenden Durchstecklöchern (16) versehen ist.

8. Holzdrehbank nach einem der vorhergehenden Ansprüche, dadurch gekennzeichnet, daß der Werkzeugträger (6) einen auf den Trägern (8) aufliegenden Schwenkarm (21) aufweist, der mittels einer Spanneinrichtung auf den Trägern (8) lösbar festlegbar ist, die eine die Träger (8) überbrückende, an den nach unten weisenden Flanken seitlicher Trägervorsprünge (20) abgestützte Traverse (24) und einen die Drehachse des Schwenkarms (21) bildenden, diesen mit der Traverse (24) verbindenden, vorzugsweise mittels eines Exzenternockens (26) betätigbaren Zuganker (22) aufweist, und daß die Traverse (24) mittels einer bei angezogenem Zuganker (22) vorgespannten Feder (23) lüftbar ist.

9. Holzdrehbank nach Anspruch 8, dadurch gekennzeichnet, daß die Träger (8) zumindest in ihrem vom zugeordneten Auflageschenkel der Auflage (10) bzw. Zwischenstück (12) jeweils nicht erfaßten mittleren Abschnitt einen geschlossenen Kastenquerschnitt aufweisen.

**Claims**

1. In a wood-turning lathe, which is used by do-it-yourself handymen in particular, with a bed supported on feet (7) for accommodating a tailstock (3) which is situated opposite a stationary headstock (2) and can be moved, and an adjustable tool rest (6), characterized in that there is a bed of which the length can be adjusted and which has two sections resting on top of each other with their ends facing each other, and being accommodated on the feet (7) with their ends opposite each other, whereby the one section consists of two sides of a rest (10) projecting over the headstock (2) on the side of the tailstock (3), and the other section which accommodates the tailstock (3) and the tool rest (6) consists of two supports (8) which, with their ends on the side of the headstock (2), are movably accommodated on the sides of the rest (10) passing under them, and can be detachably secured to them by means of a tightening device (14, 15).

2. A wood-turning lathe as claimed in claim 1 characterized in that the one section (5) of the bed consists of two parallel supports (8) and its rest (10) of two parallel sides of the rest (10) which are attributed to the supports (8) and secured to the lower end of the headstock (2).

3. A wood-turning lathe as claimed in claim 2 characterized in that the supports (8) are secured to each other by means of spacers (9) which preferably are in the form of distance pins and are located at the ends of the supports (8).

4. A wood-turning lathe as claimed in anyone of the preceding claims 1 to 3 characterized in that the end of the bed section (5) on the side of the tailstock (3) is accommodated on intermediate pieces (12) of which the cross section corresponds to the cross section of the sides forming the rest (10), and which are secured to a respective foot (7) each.

5. A wood-turning lathe as claimed in anyone of the preceding claims 1 to 4 characterized in that the supports (8), which preferably have been molded in a pressing mold, have, at their upper part, a cross section of about the form of a cross, and at their lower edge, are provided with the respective side of the rest (10) or respectively with marginal bends (18) passing like claws over the respective intermediate piece (12) on both sides.

6. A wood-turning lathe as claimed in anyone of the preceding claims characterized in that the tailstock (3) has a guide groove at one support (8), and a smooth contact surface at the support adjacent to it.

7. A wood-turning lathe as claimed in anyone of the preceding claims characterized in that for forming the tightening device respective to the sides of the rest (10), there are tie rods (14) which, on the one side, are supported on a yoke plate (15) form-locking with the profile of the support (8), and on the other side, are supported on the respective side of the rest (10), whereby the heads of the tie rods (14), preferably via spacer sleeves (17), are supported on the respective crosspiece of the sides of the rest (10) on the side of the support (8), the crosspiece opposite thereto having through holes (16) in alignment therewith.

8. A wood-turning lathe as claimed in anyone of the preceding claims characterized in that the tool rest (6) has a swinging arm (21) resting on the supports (8) and being able to be detachably secured to them by means of a tightening device consisting of a traverse (24) which bridges the supports (8) and is supported on the downward flanks of the lateral projections (20) of the supports (8), and of a tie rod (22) which forms the axis of rotation of the swinging arm (21), connects the latter with the traverse (24), and preferably can be activated by means of an eccentric cam (26), and that the traverse (24) can be raised by means of a spring (23) initially stressed with the tie rod (22) tightened.

9. A wood-turning lathe as claimed in claim 8 characterized in that the supports (8) have a closed box cross section at least in their middle part which is not reached by the respective side of the rest (10) or by the intermediate piece (12) respectively.

**Revendications**

1. Tour à bois, destiné, en particulier, à l'équipement du menuisier amateur ou du menuisier travaillant à domicile, muni d'un banc porté par des pieds (7) et faisant office de support pour une poupée fixe stationnaire (2) et pour une poupée mobile (3) coulissante, y opposée, et un porte-outil coulissant (6), caractérisé en ce qu'il est équipé d'un banc de longueur réglable, composé de deux parties superposées avec leurs extrémités, qui se regardent et reposent sur des pieds (7) avec leurs extrémités opposées, parties dont l'une se compose de deux bras de support (10), faisant saillie au niveau de la poupée fixe (2) du côté de la poupée mobile (3), et l'autre partie, qui porte la poupée mobile (3) et le porte-outil (6), se compose de deux poutres (8) susceptibles de coulisser avec leurs extrémités situées du côté de la poupée fixe (2) sur lesdits bras (10) disposés sous elles et y fixées de manière démontable au moyen d'un dispositif de serrage approprié (14, 15).

2. Tour à bois selon la revendication 1, caractérisé en ce qu'une (5) des deux parties de son banc se compose de deux poutres parallèles (8) et le support correspondant (10) comporte deux bras de support parallèles, qui correspondent auxdites poutres et sont fixés à l'extrémité inférieure de la poupée fixe (2).

3. Tour à bois selon la revendication 2, caractérisé en ce que lesdites poutres (8) sont réunies par des espaceurs (9) situés à leurs extrémités et se présentent de préférence sous forme de boulons espaceurs.

4. Tour à bois selon l'une ou l'autre des revendications précédentes 1-3, caractérisé en ce que l'extrémité, située du côté de la poupée mobile (3), de la partie (5) du banc est portée par des pièces intermédiaires (12), qui sont profilées conformément aux bras formant le support (10) et sont fixées chacune à un pied correspondant (7).

5. Tour à bois selon l'une ou l'autre des revendications précédentes 1-4, caractérisé en ce que lesdites poutres (8), fabriquées de préférence par estampage, sont en haut profilées pratiquement en forme de croix et munies en bas, au niveau de leur bout inférieur, de bords recourbés (18) coopérant, à la manière de griffes, de part et d'autre avec un des bras de support (10) et/ou avec la pièce intermédiaire (12) correspondante.

6. Tour à bois selon l'une ou l'autre des revendications 1-5, caractérisé en ce que ladite poupée mobile (3) présente, d'une part, au niveau d'une poutre (8), une rainure de guidage et, d'autre part, au niveau de la poutre voisine, une face de support plane.

7. Tour à bois selon l'une ou l'autre des revendications précédentes 1-6, caractérisé en ce que, pour la formation du dispositif de serrage accompagnant le support (10), sont prévus des tirants (14), qui s'appuient, d'une part, sur une plaque en forme de fléau (15) prenant positivement dans le profilé de support et, d'autre part, sur les bras de support correspondants, et en ce que les têtes desdits tirants (14) s'appuient, de préférence par l'entremise de douilles d'espacement (17), sur les éléments transversaux correspondants, situés du côté des poutres (8), desdits bras de support (10), dont les éléments opposés sont, à cet effet, munis de trous de passage (16) dûment alignés.

8. Tour à bois selon l'une ou l'autre des revendications précédentes 1-7, caractérisé en ce que ledit porte-outil (6) est muni d'un bras pivotant (21) reposant sur les poutres (8) et susceptible d'y être fixé de manière démontable au moyen d'un dispositif de serrage, muni d'une pièce transversale (24) réunissant les poutres (8) et s'appuyant sur les flancs orientés vers le bas de saillies latérales (20) des poutres, et d'un tirant (22) faisant office d'axe de rotation dudit bras pivotant (21), reliant ce dernier à ladite pièce transversale (24) et commandé de préférence au moyen d'une came excentrique (26), et en ce que cette pièce transversale (24) peut être soulevée au moyen d'un ressort (23) tendu au préalable lors du serrage dudit tirant (22).

9. Tour à bois selon la revendication 8, caractérisé en ce que lesdites poutres (8) sont profilées en forme de caissons fermés au moins dans leur partie médiane non sollicitée par le bras correspondant du support (10) ni par la pièce intermédiaire (12).

FIG 1

0 082 446

FIG 2

2